# EUROPEAN PATENT APPLICATION

(11) **EP 4 496 105 A1**
(43) Date of publication of application: **22.01.2025**
(21) Application number: 23769447.6
(22) Date of filing: 19.01.2023
(51) Int. Cl.: H01M 50/502, H01M 50/503, H02J 7/00

(54) **BATTERY CHARGING SYSTEM HAVING COMPATIBLE CONNECTION APPARATUS**

(30) Priority: 15.03.2022 CN 202210254337; 15.03.2022 CN 202210255894
(71) Applicant: Shenzhen Grepow Battery Co. Ltd, Shenzhen, Guangdong 518000 (CN)
(72) Inventor: LIU, Bing, Shenzhen, Guangdong 518000 (CN); GUO, Bing, Shenzhen, Guangdong 518000 (CN); LIU, Shiyu, Shenzhen, Guangdong 518000 (CN)
(74) Representative: Cabinet Chaillot
(86) International application number: PCT/CN2023/073115
(87) International publication number: WO 2023/173936

(57) **Abstract**

Disclosed in the present invention is a battery charging system having a compatible connection apparatus, in which system, rechargeable batteries, charging apparatuses and battery charging systems having an updated battery management function and which can meet compatibility requirements are implemented by means of the connection apparatus. The product has a simple structure, tedious operations for setting user parameters are eliminated, and new and old rechargeable batteries and a charging device are allowed to be used interchangeably by a user, thereby greatly improving the usage experience of users.

## Description

### TECHNICAL FIELD

The present invention belongs to the field of battery charging systems with compatible connection devices, and particularly relates to a battery connection device, a charging connection device, a rechargeable battery, a charging device and a battery charging system with upgraded battery management functions and capable of meeting compatibility requirements.

### BACKGROUND

Radio-controlled (RC) model devices, such as vehicle models and flight models, require independent rechargeable batteries to power their operation. Types of batteries required have increased due to a wide variety of RC model devices. Charging devices compatible with different types of batteries are available on the market. For example, according to chemical types of battery, batteries may include metal hydride/nickel (MH-Ni) batteries, lithium nickel manganese oxide (Li-Ni-Mn-O) batteries, lithium polymer (LiPo) batteries, lead-acid batteries, and the like. Batteries of different chemical types exhibit quite different charging and discharging characteristics. For example, a charging curve of the MH-Ni battery has two charging potential platforms, therefore, a user needs to set the chemical type of battery in charging equipment, and adjusts the charging mode corresponding to the chemical type of battery through the charging equipment. When the user performs an improper operation, such as selecting a charging mode that does not match chemical properties of the battery, service life of the battery will be shorted, which will cause damage to the battery.

In order to enable the charging equipment to automatically identify battery characteristics, one solution in the prior art is to use a battery management system (BMS). The BMS is integrated into the battery and has multiple functions, including evaluating a state of charge of the battery, dynamically monitoring operating conditions, and balancing a single battery cell, and the like. However, the solution is costly and complex in functions, and is unable to adapt to a diverse range of batteries required in the field of model device. Another solution in the prior art is to obtain battery information by setting a printed label on the battery and using a terminal camera, or by setting a radio frequency tag on the battery and setting a radio frequency identification (RFID) module on the charging equipment. On one hand, the user needs to perform additional charging operations for these solutions; on the other hand, these solutions adopt newer devices that are incompatible with traditional batteries or charging equipment.

### SUMMARY

Aiming at deficiencies of the prior art and considering the market demands, an objective of the present invention is to provide a battery connection device, a charging connection device, a rechargeable battery, a charging device and a battery charging system with upgraded battery management functions and capable of meeting compatibility requirements, which can address the problems of difficulty in upgrades and poor compatibility of the battery management functions in the prior art, and can enable the rechargeable battery to perform configuration information storage, parameter detection, and other functions through the plug-in connection to interfaces, and to be connected and charged by a traditional charger in a compatible manner.

Based on a single inventive concept, the present invention involves two types of product, depending on specific improvement parts: for a type 1, the present invention provides a connection device that can facilitate the upgrading of battery management functions of the rechargeable battery and the charge device while meeting compatibility requirements; and for a type 2, the present invention provides a rechargeable battery, a charging device and a battery charging system capable of enabling the upgrading of battery management functions of the rechargeable battery and the charge device while meeting compatibility requirements through the connection device.

The technical solutions of the above two types of product will be specifically described below.

### Type 1

As a specific and preferred implementation to address the aforementioned technical problems, the present disclosure, in a first aspect, provides a battery connection device designed to be configured in a rechargeable battery, and can connect a chip to a charging device that is matched with the rechargeable battery, and it can also be connected to a traditional charging interface without obstruction.

Specifically, A battery connection device, comprising a first connection body, wherein the first connection body comprises: a first base; a first plug-in structure being arranged in a front end of the first base; first contact members being arranged in the first plug-in structure in a plug-in direction; a chip being fixedly arranged inside the first base and having a first pin; and a second contact member being electrically connected to the first pin; wherein a front end of the second contact member is located on a rear side of a rear end of the first plug-in structure, or the front end of the second contact member can move to the rear side of the rear end of the first plug-in structure, such that the first plug-in structure can be plugged without obstruction into another plug-in component that is matched with the first plug-in structure.
wherein a second terminal hole consistent with the plug-in direction is formed on one side of the first base, the second contact member is fixedly arranged inside the second terminal hole, and a front end of the second terminal hole is located on the rear side of the rear end of the first plug-in structure.
wherein the first connection body further comprises a plug-in body and a second wire, the second contact member is fixedly arranged on the plug-in body, the second contact member is electrically connected to one end of the second wire, and the other end of the second wire is electrically connected to the first contact member capable of being electrically connected to a negative electrode of a battery.
wherein the chip is a memory, and the memory stores at least one piece of parameter information about the battery; and the chip further has a second pin, and the second pin is electrically connected to the negative electrode of the battery through the first contact member.
wherein the first connection body further comprises a first wire, the first wire is arranged at a rear end of the first base, and is electrically connected to the first contact member; or the first connection body further comprises a third plug-in structure, and the third plug-in structure is arranged at the rear end of, and the rear end of the first contact member extends into the third plug-in structure.

In a second aspect, the present disclosure provides a charging connection device configured in a charging device, the device can connect to a battery that is matched with the charging device and obtain information from the chip in the battery, and it can also be connected to a traditional battery interface without obstruction.

Specifically, A charging connection device, comprising a second connection body, which is configured to be matched with and plugged into the battery connection device according to claim 1, wherein the second connection body comprises: a second base; a second plug-in structure being arranged inside the second base; third contact members being arranged in the second plug-in structure in a plug-in direction, and being electrically connected to a charging circuit; an additional plug-in structure being arranged on the second base in the plug-in direction, and being located on one side of the second plug-in structure; and a fourth contact member being arranged inside the additional plug-in structure, and being electrically connected to the charging circuit; wherein the additional plug-in structure is located on an outer side of the second plug-in structure in the plug-in direction, such that the second connection body can be connected to another plug-in component that is matched with the second plug-in structure.

### Type 2

As another specific and preferred implementation to address the aforementioned technical problems, the present disclosure, in a third aspect, provides a rechargeable battery that is provided with a connector, and is capable of providing parameter information from a storage module to the rechargeable battery, and it can also be connected to a traditional charging interface without obstruction.

Specifically, A rechargeable battery, comprising a battery body and a first connector, the first connector comprises: a first base, a first plug-in structure is arranged in a front end of the first base, and an extension structure is arranged on one side of the first base; first contact members being arranged in the first plug-in structure in a plug-in direction and being electrically connected to the battery body; a storage module being arranged inside the first base in the plug-in direction and has a data terminal; and the second contact member being arranged inside the extension structure and being electrically connected to the data terminal; wherein the storage module stores at least one piece of parameter information about the battery body, such that the parameter information can be provided to charging equipment through the second contact member when the first plug-in structure in plugged, and a front end of the extension structure is located at a rear side of a rear end of the first plug-in structure, such that the first plug-in structure can be plugged without obstruction into another plug-in component that is matched with the first plug-in structure.
wherein the first plug-in structure is a positive plug-in component, and terminal holes are formed on the first plug-in structure in the plug-in direction for arranging the first contact member; a terminal hole is formed on the extension structure in a plug-in structure for arranging the second contact member; and the storage module further has a ground terminal, and the ground terminal is electrically connected to a negative electrode of the battery body.
wherein a wire is arranged at a rear end of the first base, and the first contact members are connected to the battery body through the wire.
wherein the battery body is composed of at least two battery cells connected in series; the battery body comprises power connection terminals led out from positive and negative electrodes of the battery body, and balance connection terminals led out from a node of each of the battery cells, and the first contact members are electrically connected to the balance connection terminals.

In a fourth aspect, the present disclosure provides a charging device.

Specifically, A charging device, comprising a charging circuit, a processor and a second connector, wherein the second connector comprises: a second base, the second base is provided with a second plug-in structure, and an expansion structure arranged on the second base and located on one side of the second plug-in structure; third contact members being arranged in the second plug-in structure in a plug-in direction, and being electrically connected to a charging circuit; and a fourth contact member being arranged inside the expansion structure and being electrically connected to the processor; wherein the processor is configured to obtain at least one piece of parameter information about the battery through the fourth contact member, and a front end of the fourth contact member is located at front sides of front ends of the third contact members, such that the fourth contact is electrically connected to another plug-in component away from the second plug-in structure.
wherein the second plug-in structure is negative plug-in sockets, the third contact members are arranged inside the negative plug-in sockets, the expansion structure is an expansion hole arranged on a periphery of the negative plug-in sockets, and the fourth contact member is arranged inside the expansion hole.
wherein the processor is configured to control an output power of the charging circuit according to the parameter information.
wherein the charging circuit comprises a charging module and a balancing charging module, and the balancing charging module is electrically connected to the third contact members.

In a fifth aspect, the present disclosure provides a battery charging system.

Specifically, a battery charging system, comprising the rechargeable battery and the charging device, wherein the rechargeable battery comprises the battery body and the first connector, and the charging device comprises the charging circuit, the processor and the second connector, wherein
the first connector comprises the first base, the first plug-in structure being arranged in the front end of the first base, the extension structure being arranged on one side of the first base, first contact members being arranged in the first plug-in structure in a plug-in direction and being electrically connected to the battery body, the storage module being arranged inside the first base, and the second contact member being arranged inside the extension structure in the plug-in structure and being electrically connected to the data terminal; and
the second connector comprises the second base, a second plug-in structure being arranged inside the second base, the expansion structure being arranged on the second base and located on one side of the second plug-in structure, third contact members being arranged in the second plug-in structure in the plug-in direction and being electrically connected to a charging circuit; and the fourth contact member being arranged inside the expansion structure and being electrically connected to the processor; wherein
the storage module stores at least one piece of parameter information about the battery body, the second contact member is electrically connected to the fourth contact member when the first connector is plugged into the second connector, such that the processor can obtain the parameter information; a front end of the extension structure is located at a rear side of a rear end of the first plug-in structure, such that the first plug-in structure can be plugged without obstruction into another plug-in component that is matched with the first plug-in structure; and a front end of the fourth contact member is located at front sides of front ends of the third contact members, such that the fourth contact is electrically connected to the second contact member inside the extension structure.

### Technical effects of the present invention

Compared with the prior art, the present invention has the beneficial effects as follows:
(1) In the present invention, the first plug-in structure, the chip and the second contact member connected to the chip are arranged on the battery connection device, such that the rechargeable battery can perform configuration information storage, parameter detection, and other functions through the plug-in connection to interfaces; and moreover, the second contact member is arranged, such that the first plug-in structure can be plugged into another plug-in component that is matched with the first plug-in structure, such that the battery can be connected and charged by a traditional charger in a compatible manner, compatibility between new and old charging batteries and devices is achieved, making battery function upgrades more readily acceptable to the user. Further, the charging device in the present invention can automatically obtain the parameter information about the battery and set a charging mode, the user does not need to manually set the parameters, thereby avoiding potential battery damage due to incorrect settings and greatly improving the user experience.
(2) In the present invention, a storage module is arranged on the first connector of the rechargeable battery, the first connector is provided with a first plug-in structure and an extension structure, the first plug-in structure is used for charging connections, and the extension structure enables the first connector to transmit the parameter information from the storage module; and furthermore, the charging device in the present invention is provided with a second connector, which is accordingly provided with a second plug-in structure and an expansion structure, such that when the user performs the plug-in operation for operation, the first plug-in structure can be matched with and connected to the second plug-in structure, and the extension structure can be connected to the expansion structure, such that the charging device is capable of automatically obtaining the parameter information about the battery and setting a charging mode, the user does not need to manually set the parameters, thereby avoiding potential battery damage due to incorrect settings and greatly improving the user experience. Furthermore, through the structural design of the first and second connectors, the battery charging system has compatibility, that is, that the rechargeable battery is compatible with traditional charging interface, and the charging device is compatible with the traditional battery interface.

The present invention will be further described below with reference to the accompanying drawings.

### BRIEF DESCRIPTION OF THE DRAWINGS

FIG. 1 is a structural schematic diagram according to Embodiment 1 of the present invention.
FIG. 2 is a schematic diagram of a circuit structure according to Embodiment 1 of the present invention.
FIG. 3 is a schematic diagram of a three-dimensional structure of Solution 1 according to Embodiment 1 of the present invention.
FIG. 4 is a structural schematic diagram of a first connection body in Solution 1 according to Embodiment 1 of the present invention.
FIG. 5 is a structural schematic diagram of a second connection body in Solution 1 according to Embodiment 1 of the present invention.
FIG. 6 is a schematic diagram of a three-dimensional structure of Solution 2 according to Embodiment 1 of the present invention.
FIG. 7 is a schematic diagram of a three-dimensional structure of Solution 3 according to Embodiment 1 of the present invention.
FIG. 8 is a structural schematic diagram of a battery charging system according to Embodiment 2 of the present invention.
FIG. 9 is a schematic diagram of a circuit structure of a battery charging system according to Embodiment 2 of the present invention.
FIG. 10 is a structural schematic diagram of a rechargeable battery according to Embodiment 2 of the present invention.

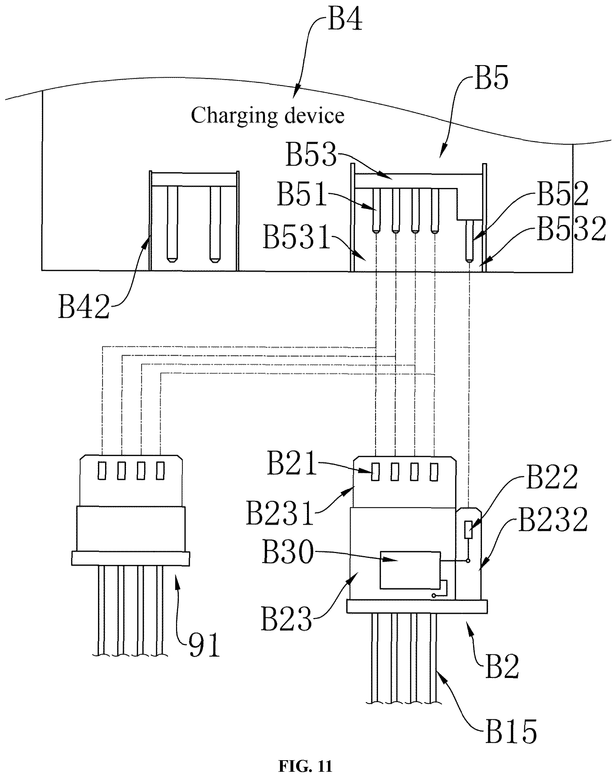

FIG. 11 is a structural schematic diagram of a charging device according to Embodiment 2 of the present invention.

### DETAILED DESCRIPTION OF EMBODIMENTS

In order to better illustrate the objects, technical solutions and advantages of the present invention, specific implementation of the present invention will be further described below in detail in conjunction with the accompanying drawings and embodiments. The following embodiments are used for describing the present invention, but are not used for limiting the scope of the present invention.

### Embodiment 1

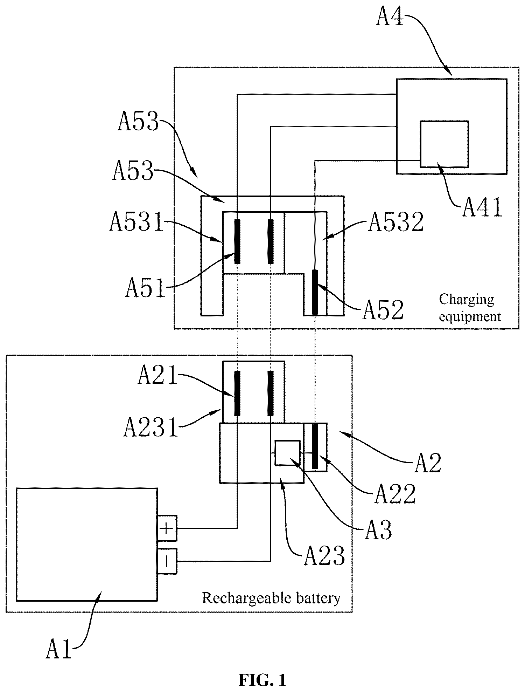

As shown in FIG. 1, a battery connection device according to Embodiment 1 of the present invention is provided. The battery connection device includes a first connection body A2. The first connection body A2 includes a first base A23, a first plug-in structure A231, first contact members A21, a second contact member A22, and a chip A3, where the first plug-in structure A231 is arranged at a front end of the first base A23; and the first contact members A21 are arranged in the first plug-in structure A231 in a plug-in direction, and are configured to conventionally connect a battery lead to charging equipment or consumption equipment. In other words, the first plug-in structure A231 can be plugged into another plug-in component that is matched with the first plug-in structure. The plug-in component has a standardized plug-in structure that is common to the charging equipment and the consumption equipment. The second contact member A22 is electrically connected to the chip A3, and is configured to connect pins of the chip A3 to the charging equipment and the consumption equipment, to realize the functions set by the chip A3. On one hand, the second contact member A22 can be fixedly arranged on the first base A23; and on the other hand, the second contact member A22 can be movably arranged relative to the first base A23 within a defined range.

In Embodiment 1, specifically, when the second contact member A22 is fixedly arranged, a front end of the second contact member A22 is located on a rear side of a rear end of the first plug-in structure A231 in a plug-in direction. It can be seen that when the first plug-in structure A231 is plugged and matched with the plug-in component on the charging equipment or the consumption equipment, the front end of the second contact member A22 does not extend into a radial space of the first plug-in structure A231, therefore, it will not constitute an obstruction to the first plug-in structure A231.

In Embodiment 1, specifically, when the second contact member A22 is movably arranged, under normal circumstances, the front end of the second contact member A22 can move between a front end and a rear end of the first plug-in structure A231; and when the first plug-in structure A231 is plugged and matched with the plug-in component on the charging equipment or the consumption equipment, the front end of the second contact member A22 moves to the rear side of the rear end of the first plug-in structure A231 through user operation or due to the plug-in movement. Since the second contact member A22 does not extend into the radial space of the first plug-in structure A231, therefore, it will not constitute an obstruction to the first plug-in structure A231.

The battery connection device in Embodiment 1 is configured in a rechargeable battery, as shown in FIG. 1. When in use, the rechargeable battery can be plugged and conductively connected to the conventional charging equipment or the consumption equipment via the first plug-in structure A231 in the first connection body A2. The rechargeable battery also realizes functional connection between the chip A3 and the charging equipment through the second contact member A22 in the first connection body A2.

Still referring to FIG. 1, a charging connection device according to Embodiment 1 of the present invention is provided. The charging connection device is configured in the charging equipment, the charging equipment includes a charging circuit A4, and the charging connection device includes a second connection body A5, where the second connection body A5 is configured to be matched with and plugged into the battery connection device in Embodiment 1. The second connection body A5 includes a second base A53, a second plug-in structure A531, a third contact member A51, a processor A41, an additional plug-in structure A532, and a fourth contact member A52, where the second plug-in structure A531 is arranged on the second base A53; and the third contact member A51 is arranged in the second plug-in structure A531 and is electrically connected to the charging circuit A4, and is configured to receive a battery with conventional interfaces. It can be understood that the battery connection device in Embodiment 1 can also be plugged into the second plug-in structure A531 through its first plug-in structure A231. The additional plug-in structure A532 is arranged on the second base A53, and is located on an outer side of the second plug-in structure A531 in a plug-in direction. The fourth contact member A52 is arranged inside the additional plug-in structure A532 in a plug-in direction and is electrically connected to the processor A41 in the charging circuit A4. Since the additional plug-in structure A532 is located on one side of the second plug-in structure A531, the battery with conventional interfaces can be plugged in without obstruction to achieve the charging function. The battery connection device in Embodiment 1 can be connected to the charging equipment, thereby achieving both the charging function and functions of the chip A3 at the same time.

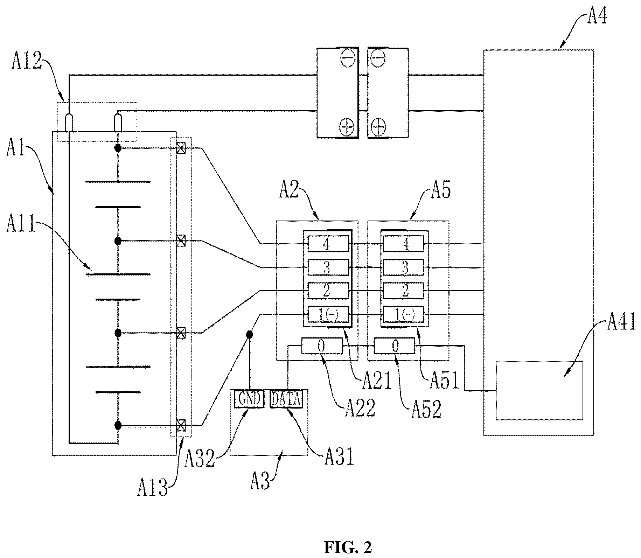

As shown in FIG. 2, in Embodiment 1, the above rechargeable battery is a radio-controlled (RC) model battery. The RC model battery is composed of three battery cells A11, and is provided with power connection terminals A12 and balance connection terminals A13, where power connection terminals A12 are led out from positive and negative electrodes of the battery body A1, respectively, and are configured to charge the charging equipment and supply power to the RC model battery. The balance connection terminals A13 are led out from a node of each of the battery cells A11 in the battery body A1. In the battery connection device in Embodiment 1, each of the first contact members A21 is connected to the balance connection terminals A13 of the battery body A1 one by one. In other words, the battery connection device is a connector for battery balance charging.

As shown in FIG. 2, the chip A3 in this embodiment is a memory chip, and stores parameter information about the battery body A1. The parameter information can be parameter information about unique identification code, battery capacity, a number of battery cells, or the chemical type of battery, and the like. The charging equipment can automatically select a corresponding charging mode based on the obtained parameter information, such that the user does not need to set the charging equipment. Further, the chip A3 has a first pin A31 and a second pin A32, where the first pin A31 serves as a data terminal for data transmission, that is, a DATA terminal. The second pin A32 is a ground terminal for loop grounding, that is, a GND terminal. The second contact member A22 is electrically connected to the first pin A31 of the chip A3, and the second pin A32 of the chip A3 is electrically connected to the first contact member A21 marked as "1(-)", and the first contact member A21 is electrically connected to a node of the negative electrode of the battery body A1, such that the second pin A32 of the memory is electrically connected to the negative electrode of the battery body A1. When the rechargeable battery is plugged in and connected to the charging equipment, a ground terminal of the processor A41 is connected to the negative electrode of the balance connection terminal A13 in the battery body A1, therefore, the chip A3 can be connected to the second pin A32 of the chip via the first contact member A21 marked as "1(-)", such that the chip A3 does not need to independently connect the second contact member A22, thereby reducing a number of terminals and decreasing a size of the connector.

It can be seen that by incorporating the chip A3 into the battery connection device, Embodiment 1 can realize the functions of the chip A3, such as storing the parameter information and enabling the charging equipment to automatically select the charging mode based on the parameter information, and further, the battery connection device can also compatible with conventional charging equipment, consumption equipment, and batteries.

### Solution 1 of Embodiment 1

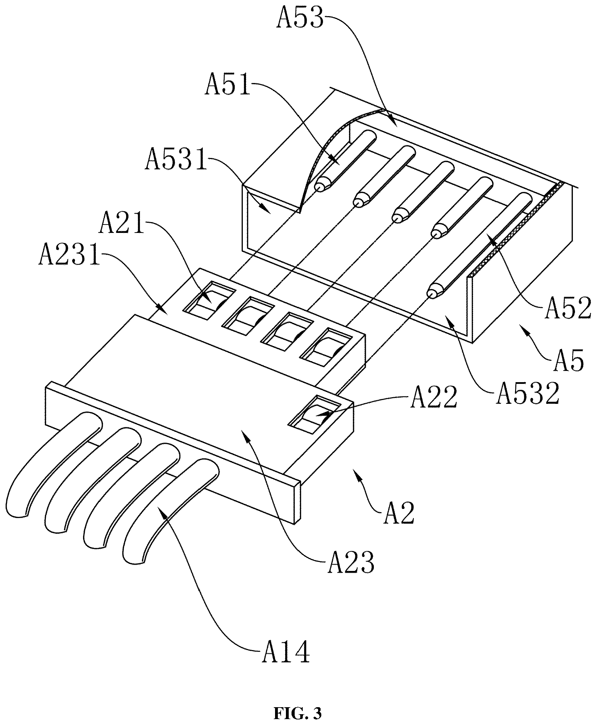

As shown in FIG. 3, a charging connection device according to Solution 1 of this embodiment is provided, where the first connection body A2 includes a first base A23, a first plug-in structure A231, first contact members A21, a second contact member A22, and a chip A3, The chip A3 is arranged inside the first base A23. The first plug-in structure A231 is positive plug-in posts, and is arranged in a front end of the first base A23. The first plug-in structure A231 is provided with four terminal holes in a plug-in direction. Each of the first contact members A21 is provided with four, each of which is fixedly arranged in the corresponding terminal hole. One side of the base is provided with another terminal hole, and the second contact member A22 is fixedly arranged inside the another terminal hole. A front end of the second contact member A22 does not extend to a rear end of the positive plug-in post. A rear end of the first base A23 is provided with four first wires A14, and each of the first wires A14 can be connected to one of the balancing connection terminals A13.

Still referring to FIG. 3, in Solution 1 of this embodiment, specifically, the second connection body A5 includes a second base A53, a second plug-in structure A531, third contact members A51, an additional plug-in structure A532, and a fourth contact member A52. The second plug-in structure A531 is negative plug-in sockets, and four of the third contact members A51 are arranged inside the negative plug-in sockets in a plug-in direction, where the positive plug-in posts and the negative plug-in sockets are matched with each other. The additional plug-in structure A532, that is, an additional plug-in socket, is arranged on one side of one of the negative plug-in sockets. The fourth contact member A52 is arranged inside the additional plug-in structure A532. The four third contact members A51 are conductively connected to the charging circuit A4. The fourth contact member A52 is conductively connected to the processor A41. A front end of the fourth contact member A52 is located at front sides of front ends of the third contact members A51.

It can be seen that when the second contact member A22 is fixedly arranged on a rear side of the first plug-in structure A231, the second contact member A22 can be prevented from obstructing the first plug-in structure A231 that is plugged into a traditional charging interface 92. The fourth contact member A52 is arranged on the additional plug-in structure A532, which can prevent the fourth contact member A52 from obstructing the second plug-in structure A531 when it receives a traditional battery interface 91. Furthermore, a front end of the fourth contact member A52 is located forwards, ad can be matched with the second contact member A22 for conductive contact.

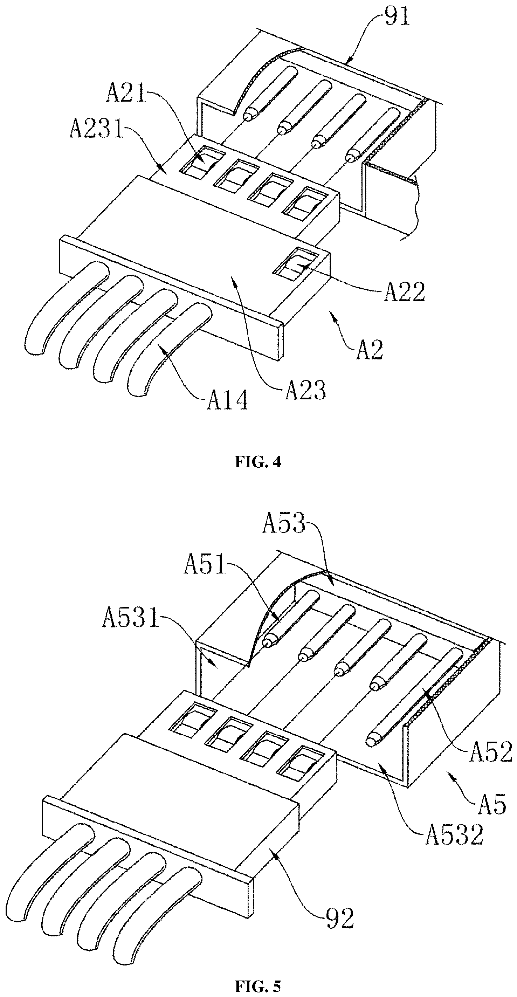

FIG. 4 shows the first connection body A2 in Solution 1 of this embodiment is plugged into the traditional charging interface 92. The first plug-in structure A231 of the first connection body A2 can be fully plugged into the traditional charging interface 92, such that each of the first contact members A21 can realize the charging function through the traditional charging interface 92. Since the second contact member A22 is arranged on one side of the first base A23, the plug-in operation of the first plug-in structure A231 will not be obstructed.

FIG. 5 shows the second connection body A5 in Solution 1 of this embodiment is plugged into the traditional battery interface 91. The second plug-in structure A531 in the second connection body A5 is fully inserted into the traditional battery interface 91, such that each of the third contact members A51 can charge the battery through the traditional battery interface 91, and the additional plug-in structure A532 is only arranged on one side of the second base A53, ensuring that it will not obstruct the plug-in operation of the traditional battery interface 91.

### Solution 2 of Embodiment 1

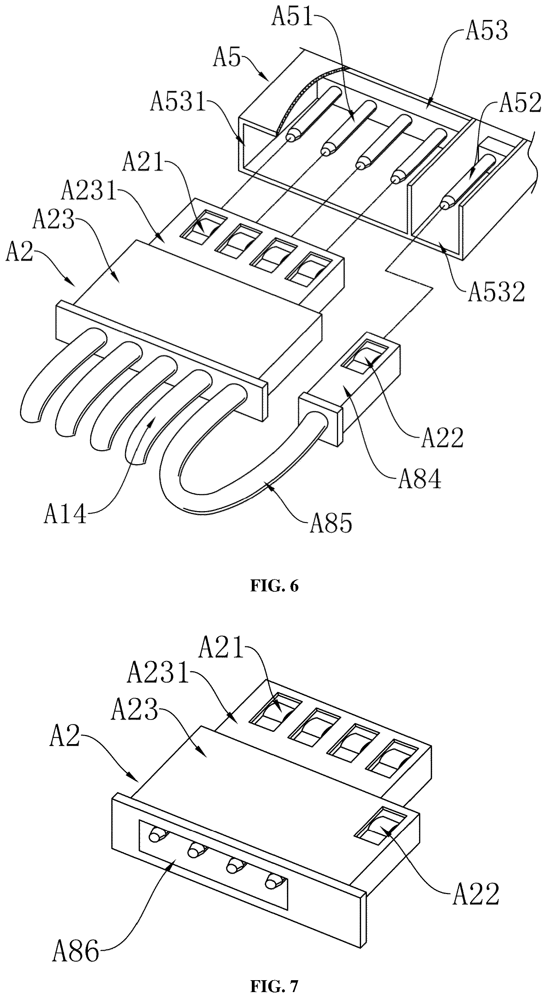

As shown in FIG. 6, a charging connection device according to Solution 2 of this embodiment is provided, where the first connection body A2 includes a first base A23, a first plug-in structure A231, first contact members A21, a second contact member A22, a plug-in member A84, a second wire A85 and a chip A3. Specifically, arrangement of the first plug-in structure A231 is consistent with that in Solution 1 of this embodiment. A terminal hole is formed on the plug-in body A84, and the second contact member A22 is fixed inside the terminal hole. The chip A3 is fixed inside the first base A23. The first pin A31 of the chip A3 is connected to the second contact members A22 through the second wire A85. Furthermore, both ends of the second wire A85 are respectively fixed to the first base A23 and the plug-in body A84. The plug-in body A84 can move within a length range of the second wire A85, and it can either be moved to the rear side of the rear end of the first plug-in structure A231, or be plugged in the second connection body A5 when the first connection body A2 is plugged into the second connection body A5.

### Solution 3 of Embodiment 1

As shown in FIG. 7, a battery connection device according to Embodiment 1 of the present invention is provided. where the first connection body A2 includes a first base A23, a first plug-in structure A231, first contact members A21, a second contact member A22, a chip A3 and a third plug-in structure A86. A structure of the first connection body A2 is basically consistent with that in Solution 1 of this embodiment. The third plug-in structure A86 is arranged in a rear end of the first base A23. Each of the first contact members A21 extends into the third plug-in structure A86. The third plug-in structure A86 is configured to connect to the traditional battery interface 91, to enable the traditional battery interface 91 have the functions of the chip A3.

### Embodiment 2

As shown in FIG. 7, a battery charging system according to Embodiment 2 of the present invention is provided. The battery charging system includes a rechargeable battery according to the above embodiment, and a charging device according to the above embodiment.

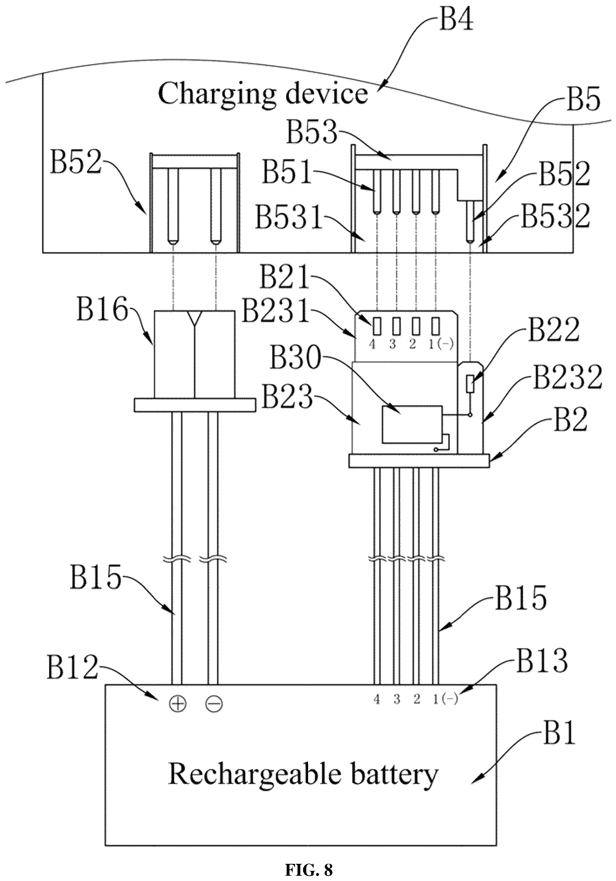

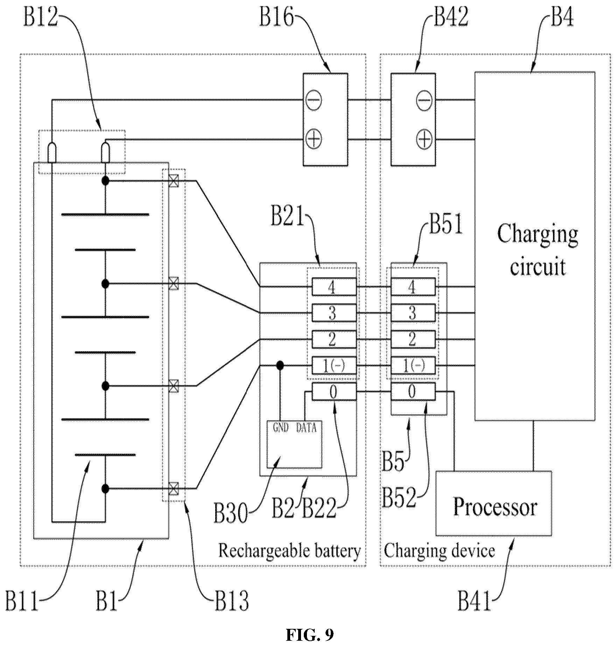

Referring to FIGs. 7 and 8, the battery charging system in Embodiment 2 is provided, and referring to FIG. 9, the rechargeable battery in Embodiment 2 is provided. The battery charging system in FIG. 7 includes the rechargeable battery in FIG. 9. The rechargeable battery includes a battery body B1, a power connector B16, and a first connector B2, where the battery body B1 is composed of three battery cells B11 connected in series, and has two power connection terminals B12 that are led out from positive and negative electrodes of the battery body B1, as well as four balance connection terminals B13 that are led out from nodes of each of the battery cells B 11. The power connector B 16 is connected to each of the power connection terminal B12 through wires B15, and the first connector B2 is connected to each of the balance connection terminal B13 through wires B15. In order to achieve automatic identification of battery information and corresponding selection of a charging mode, the first connector B2, as an insulating part, has a first base B23, a first plug-in structure B231 is arranged at a front end of the first base B23, and an extension structure B232 is arranged on one side of the first base B23. Specifically, the first plug-in structure B231 is a positive plug-in component, four terminal holes are formed on the first plug-in structure in a plug-in direction, one first contact member B21 is fixedly arranged inside each of the terminal holes, and each of the first contact members B21 is connected to one wire B15 at a rear end of the first connector B2 to connect the balance connection terminal B13 in the battery body B1. One plug-in hole is arranged inside the extension structure B232 in a single plug-in direction, and a second contact member B22 is fixedly arranged inside the terminal hole. A cavity is formed on the first base B23, and a storage module is fixedly arranged inside the cavity. The storage module is a storage chip, the storage chip has a data terminal and a ground terminal, and stores parameter information about unique identification code, battery capacity, a number of battery cells, or the chemical type of battery. Specifically, the data terminal is conductively connected to the second contact member B22, and the ground terminal is conductively connected to the first contact member B21 marked as "1". The first contact member B21 marked as "1" is conductively connected to a negative electrode of the battery body B1, while the first contact members B21 marked as "1" to "4" are connected to node of each of the battery cells B11, excluding the negative electrode. In order to ensure that the rechargeable battery in this embodiment is capable of not only be connected to the charging device in this embodiment, but also being connected to the traditional charging interface 92 in a compatible manner, as shown in FIG. In the rechargeable battery in this embodiment, the first plug-in structure B231 is configured to be plugged into and compatible with the traditional charging interface 92, in other words, the first plug-in structure B231 is consistent with the plug-in part of the traditional battery interface 91. Moreover, the extension structure B232 is located on one side of the first base B23, such that a contact direction of the second contact member B22 inside the extension structure B232 does not overlap a plug-in direction of the first plug-in structure B231. In addition, a front end of the extension structure B232 is located at a rear end of the first plug-in structure B231, that is, a front end of the second contact member B22 inside the extension structure B232 is also located at the rear end of the first plug-in structure B231. In other words, when each side of the first plug-in structure B231 is plugged with another plug-in structure, such as a second connector B5 or the traditional charging interface 92, the extension structure B232 does not constitute an obstruction to the first plug-in structure B231.

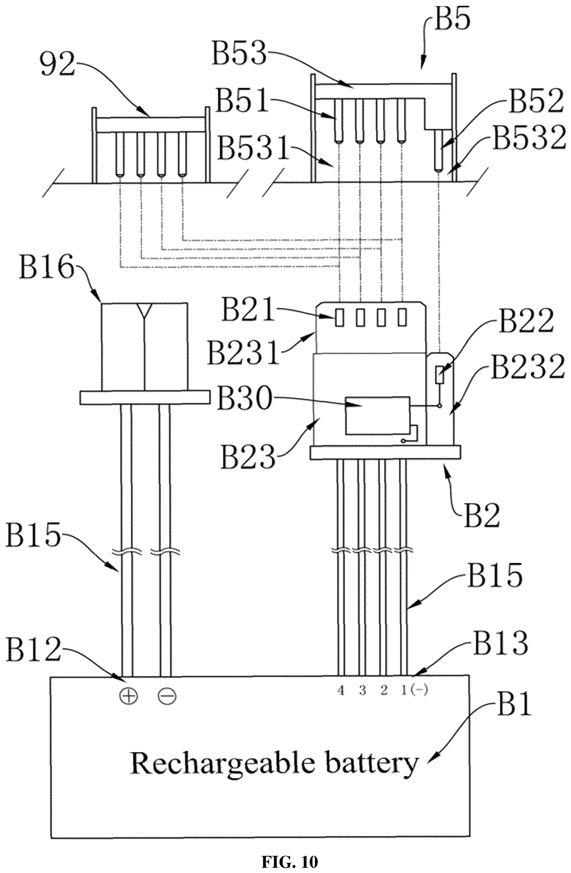

Referring to FIGs. 7 and 8, the battery charging system in Embodiment 2 is provided, and referring to FIG. 10, the rechargeable battery in Embodiment 2 is provided. The battery charging system in FIG. 7 includes a charging device shown in FIG. 10. The charging device includes a charging circuit B4, a processor B41, a main charging port B42, and a second connector B5. The charging circuit B4 includes a charging module and a balancing charging module. Specifically, the charging module is configured to charge positive and negative electrodes of the battery body B1, and the balancing charging module is configured to balance charging capacity of each of the battery cells B11. The main charging port B42 is conductively connected to the charging module, and a power connector B16 of the rechargeable battery in this embodiment can be plugged into and conductively connected to the main charging port B42 to charge the battery. The second connector B5 is conductively connected to the balancing charging module, and the first connector B2 of the rechargeable battery in this embodiment can be plugged into and conductively connected to the second connector B5 to achieve balancing charging of the battery. In order to achieve automatic identification of battery information and corresponding selection of a charging mode, the second connector B5 has a second base B23 as an insulating part, a second plug-in structure B531 arranged at the front end of the first base B23, and an expansion structure B532 arranged on the second base B53 and located on one side of the second plug-in structure B531. Specifically, the second plug-in structure B531 is negative plug-in sockets, and the expansion structure B532 is an extended plug-in socket located on one side of the negative plug-in sockets. Four third contact members B51 are arranged inside the negative plug-in sockets and are conductively connected to the charging circuit B4. One fourth contact member B52 is arranged inside the extended plug-in socket and is conductively connected to the processor B41. The processor B41 is connected to and controls the charging circuit B4, and is capable of obtaining parameter information about the battery transmitted from the fourth contact member B52, and then selecting a corresponding charging mode to control the charging circuit B4 based on the obtained parameter information about the battery transmitted.

In the battery charging system in Embodiment 2, when the first connector B2 and the second connector B5 are matched with each other, the first plug-in structure B231 and the second plug-in structure B531 are plugged and fixed with each other, and each of the first contact members B21 is conductively connected to each of the third contact members B51. It can be understood that since the expansion structure B532 is located on one side of the second plug-in structure B531, the expansion structure B532 will not obstruct the plug-in of the first connector B2. In order to ensure that the charging device in this embodiment is capable of not only be connected to the rechargeable battery in this embodiment, but also being connected to the traditional battery interface 91 in a compatible manner, as shown in FIG. 10. In the charging device in this embodiment, the second plug-in structure B531 is configured to be plugged into and compatible with the traditional battery interface 91, in other words, the second plug-in structure B531 is consistent with the plug-in part of the traditional charging interface 92. Furthermore, the expansion structure B532 is located on the side of the second plug-in structure B531, in other words, the fourth contact member B52 inside the expansion structure B532 does not affect the plug-in of the second plug-in structure B531. In addition, a front end of the fourth contact member B52 is located on a front side of a front end of the third contact member B51. In other words, when inner sides of the second plug-in structure B531 are plugged with another plug-in component that is matched with the second plug-in structure, such as the first connector B2 or the traditional battery interface 91, the fourth contact member B52 will not hinder the plug-in process. Furthermore, the fourth contact member B52 does not obstruct the insertion process. At the same time, in the insertion direction, the fourth contact member B52 will bypass the first plug-in structure B231, and is conductively connected to the second contact member B22 in a plug-in direction.

According to an example of use process of this embodiment, when a user has the battery charging system of this embodiment, that is, the rechargeable battery and the charging device of this embodiment, the user can plug the power connector B16 into the main charging port B42 and connect the first connector B2 to the second connector B5, such that the charging connection operation of the battery is completed. Moreover, the rechargeable battery not only conductively connects the balance connection terminal B13 to the charging device, but also connects the storage module B30 to the processor B41 of the charging device, such that the parameter information, such as the unique identification code, battery capacity, a number of battery cells, or the chemical type of battery, stored in the storage module B30 can be provided to the processor B41, and the processor B41 can automatically select a charging mode, therefore, the user does not need to perform the operation of manually selecting the charging mode through the charging device. When the user has the rechargeable battery in this embodiment but does not have the charging device in this embodiment, the user can charge the battery by plugging the first connector B2 into the traditional charging interface 92, and the extension structure B232 on the first connector B2 will not hinder the plug-in operation. When the user has the charging device in this embodiment and also has other traditional batteries, the user can plug the traditional battery interface 91 into the second connector B5, and then manually set the battery parameters to charge the traditional batteries.

It can be understood that in other embodiments of the present invention, the rechargeable battery can also adopt a negative plug-in structure. The charging device in this embodiment can adopt a positive plug-in structure. In other embodiments of the present invention, the storage module B30 can also be arranged on the power connection terminal B12 instead of the balance connection terminal B13 in this embodiment. Correspondingly, the extension structure B232 can also be arranged in the corresponding battery interface, and the expansion structure B532 can also be arranged in the corresponding charging interface. In other embodiments of the present invention, the first connector B2 can be integrally arranged on the battery body B1 instead of being connected by wires B15 in this embodiment.

It can be understood that in other embodiments of the present invention, more than four third contact members B51 in the charging device can be provided. For example, the second connector B5 can be provided with seven third contact members B51, and a battery body B1 that have 2-6 battery cells can be provided.

The battery charging method in Embodiment 2 can be applied in a battery charging system, which includes a rechargeable battery provided with a first connector B2 and a charging device provided with a second connector B5. The battery charging method includes the following steps: setting the storage module B30 on the rechargeable battery, and presetting parameter information about the rechargeable battery, such as unique identification code, battery capacity, the number of battery cells, or the chemical type of battery, in the storage module B30; having the charging device configured to adjust the charging power based on the parameter information; having the first connector B2 and the second connector B5 configured to transmit the parameter information from the storage module B30 to the charging device when they are plugged into each other; having the first connector B2 configured to be compatible with another charging interface that does not have a terminal for transmitting the parameter information; and having the second connector B5 configured to be compatible with another battery interface that does not have a terminal for transmitting the parameter information.

Furthermore, the terms "first", "second" and "third" are merely for the purpose of description, and cannot be construed as indicating or implying relative importance or implicitly specifying the number of technical features indicated. Thus, a feature defined with "first", "second" and "third" may explicitly or implicitly include at least one of the features.

The above embodiments mainly describe the basic principle, main features and advantages of the present invention. It should be understood by those skilled in the art that, the present invention is not limited by the embodiments described above. The embodiments described above and the descriptions in the description merely illustrate the principles of the present invention. Various changes and modifications may be made to the present invention without departing from the spirit and scope of the present invention. These changes and modifications all fall within the claimed scope of the present invention.

## Claims

1. A battery connection device, **characterized by** comprising a first connection body, **characterized in that** the first connection body comprises:
a first base;
a first plug-in structure being arranged in a front end of the first base;
first contact members being arranged in the first plug-in structure in a plug-in direction;
a chip being fixedly arranged inside the first base and having a first pin; and
a second contact member being electrically connected to the first pin; **characterized in that**
a front end of the second contact member is located on a rear side of a rear end of the first plug-in structure, or the front end of the second contact member can move to the rear side of the rear end of the first plug-in structure, such that the first plug-in structure can be plugged without obstruction into another plug-in component that is matched with the first plug-in structure.

2. The battery connection device according to claim 1, **characterized in that** a second terminal hole consistent with the plug-in direction is formed on one side of the first base, the second contact member is fixedly arranged inside the second terminal hole, and a front end of the second terminal hole is located on the rear side of the rear end of the first plug-in structure.

3. The battery connection device according to claim 1, **characterized in that** the first connection body further comprises a plug-in body and a second wire, the second contact member is fixedly arranged on the plug-in body, the second contact member is electrically connected to one end of the second wire, and the other end of the second wire is electrically connected to the first contact member capable of being electrically connected to a negative electrode of a battery.

4. The battery connection device according to claim 1, **characterized in that** the chip is a memory, and the memory stores at least one piece of parameter information about the battery; and the chip further has a second pin, and the second pin is electrically connected to the negative electrode of the battery through the first contact member.

5. The battery connection device according to claim 1, **characterized in that** the first connection body further comprises a first wire, the first wire is arranged at a rear end of the first base, and is electrically connected to the first contact member; or the first connection body further comprises a third plug-in structure, and the third plug-in structure is arranged at the rear end of, and the rear end of the first contact member extends into the third plug-in structure.

6. A charging connection device, **characterized by** comprising a second connection body, which is configured to be matched with and plugged into the battery connection device according to any of claim 1 to 5, **characterized in that** the second connection body comprises:
a second base;
a second plug-in structure being arranged inside the second base;
third contact members being arranged in the second plug-in structure in a plug-in direction, and being electrically connected to a charging circuit;
an additional plug-in structure being arranged on the second base in the plug-in direction, and being located on one side of the second plug-in structure; and
a fourth contact member being arranged inside the additional plug-in structure, and being electrically connected to the charging circuit; **characterized in that**
the additional plug-in structure is located on an outer side of the second plug-in structure in the plug-in direction, such that the second connection body can be connected to another plug-in component that is matched with the second plug-in structure.

7. A rechargeable battery, **characterized by** comprising a battery body and a first connector, the first connector comprises:
a first base, a first plug-in structure is arranged in a front end of the first base, and an extension structure is arranged on one side of the first base;
first contact members being arranged in the first plug-in structure in a plug-in direction and being electrically connected to the battery body;
a storage module being arranged inside the first base in the plug-in direction and has a data terminal; and
the second contact member being arranged inside the extension structure and being electrically connected to the data terminal; **characterized in that**
the storage module stores at least one piece of parameter information about the battery body, such that the parameter information can be provided to charging equipment through the second contact member when the first plug-in structure in plugged, and a front end of the extension structure is located at a rear side of a rear end of the first plug-in structure, such that the first plug-in structure can be plugged without obstruction into another plug-in component that is matched with the first plug-in structure.

8. The rechargeable battery according to claim 7, **characterized in that** the first plug-in structure is a positive plug-in component, and terminal holes are formed on the first plug-in structure in the plug-in direction for arranging the first contact member; a terminal hole is formed on the extension structure in a plug-in structure for arranging the second contact member; and the storage module further has a ground terminal, and the ground terminal is electrically connected to a negative electrode of the battery body.

9. The rechargeable battery according to claim 7, **characterized in that** a wire is arranged at a rear end of the first base, and the first contact members are connected to the battery body through the wire.

10. The rechargeable battery according to claim 7, **characterized in that** the battery body is composed of at least two battery cells connected in series; the battery body comprises power connection terminals led out from positive and negative electrodes of the battery body, and balance connection terminals led out from a node of each of the battery cells, and the first contact members are electrically connected to the balance connection terminals.

11. A charging device, **characterized by** comprising a charging circuit, a processor and a second connector, **characterized in that** the second connector comprises:
a second base, the second base is provided with a second plug-in structure, and an expansion structure arranged on the second base and located on one side of the second plug-in structure;
third contact members being arranged in the second plug-in structure in a plug-in direction, and being electrically connected to a charging circuit; and
a fourth contact member being arranged inside the expansion structure and being electrically connected to the processor; **characterized in that**
the processor is configured to obtain at least one piece of parameter information about the battery through the fourth contact member, and a front end of the fourth contact member is located at front sides of front ends of the third contact members, such that the fourth contact is electrically connected to another plug-in component away from the second plug-in structure.

12. The charging device according to claim 11, **characterized in that** the second plug-in structure is negative plug-in sockets, the third contact members are arranged inside the negative plug-in sockets, the expansion structure is an expansion hole arranged on a periphery of the negative plug-in sockets, and the fourth contact member is arranged inside the expansion hole.

13. The charging device according to claim 11, **characterized in that** the processor is configured to control an output power of the charging circuit according to the parameter information.

14. The charging device according to claim 11, **characterized in that** the charging circuit comprises a charging module and a balancing charging module, and the balancing charging module is electrically connected to the third contact members.

15. A battery charging system, **characterized by** comprising the rechargeable battery and the charging device, **characterized in that** the rechargeable battery comprises the battery body and the first connector, and the charging device comprises the charging circuit, the processor and the second connector;
the first connector comprises the first base, the first plug-in structure being arranged in the front end of the first base, the extension structure being arranged on one side of the first base, first contact members being arranged in the first plug-in structure in a plug-in direction and being electrically connected to the battery body, the storage module being arranged inside the first base, and the second contact member being arranged inside the extension structure in the plug-in structure and being electrically connected to the data terminal; and
the second connector comprises the second base, a second plug-in structure being arranged inside the second base, the expansion structure being arranged on the second base and located on one side of the second plug-in structure, third contact members being arranged in the second plug-in structure in the plug-in direction and being electrically connected to a charging circuit; and the fourth contact member being arranged inside the expansion structure and being electrically connected to the processor; **characterized in that**
the storage module stores at least one piece of parameter information about the battery body, the second contact member is electrically connected to the fourth contact member when the first connector is plugged into the second connector, such that the processor can obtain the parameter information; a front end of the extension structure is located at a rear side of a rear end of the first plug-in structure, such that the first plug-in structure can be plugged without obstruction into another plug-in component that is matched with the first plug-in structure; and a front end of the fourth contact member is located at front sides of front ends of the third contact members, such that the fourth contact is electrically connected to the second contact member inside the extension structure.
